Europäisches Patentamt

European Patent Office

Office européen des brevets

(19)

(11) **EP 0 955 269 A1**

(12) # DEMANDE DE BREVET EUROPEEN

(43) Date de publication:
  **10.11.1999 Bulletin 1999/45**

(51) Int. Cl.$^6$: **C02F 3/28**, A01K 63/04

(21) Numéro de dépôt: **98390006.9**

(22) Date de dépôt: **29.04.1998**

(84) Etats contractants désignés:
  **AT BE CH CY DE DK ES FI FR GB GR IE IT LI LU MC NL PT SE**
  Etats d'extension désignés:
  **AL LT LV MK RO SI**

(71) Demandeur: **AB7 Industries SA**
  **31450 Deyme (FR)**

(72) Inventeurs:
  • **Couderc, Hervé**
    **15000 Aurillac (FR)**
  • **Lautier, Jean-Pierre**
    **31670 Labege (FR)**
  • **Chelle, René**
    **31190 Grepiac (FR)**

(54) **Réacteur dénitratant hétérotrophe à atmosphère contrôlée**

(57) <u>Domaine technique</u> : aquariologie

Dans un aquarium, les déchets azotés subissent une fermentation oxydative conduisant à la formation de nitrites puis de nitrates. Les nitrates s'accumulent obligeant de fréquents changements d'eau.

L'invention présentée est un dispositif original destiné à réduire ces nitrates en azote gazeux. L'invention se distingue des autres dispositifs existants sur le marché par le procédé utilisé pour obtenir un milieu anaérobie, indispensable à l'activité des bactéries réductrices. Ce procédé repose sur l'augmentation de la pression partielle en $CO_2$ engendré par la réaction d'un acide faible sur un sel d'alcalino-terreux. En plus du $CO_2$, la réaction génère des bases carboniques utilisées par les bactéries comme nutriment. Le dispositif peut également servir à enrichir le milieu en ion calcium ou tout autre minéral, ce qui est particulièrement intéressant pour l'élevages d'espèce aquatiques délicates comme les coraux.

<u>Utilisation principale de l'invention</u> : réduction du taux de nitrate dissous des biotopes aquatiques en milieu clos comme par exemple les aquariums.

EP 0 955 269 A1

Description

## I- Présentation de la problématique.

Les aquariums sont des milieux clos dans lesquels on s'efforce de reproduire des conditions de vie optimales pour différentes espèces aquatiques, animales ou végétales. Le développement de cette activité a conduit à l'émergence d'une catégorie d'amateurs passionnés qui cherchent à maintenir des espèces de plus en plus délicates. Des souches de poissons sauvages, des invertébrés marins (Stolonifères. Alcyonnaires, Gorgones. Madréporaires...) qui ne peuvent souffrir la médiocrité en ce qui concerne le biotope.

Dans la nature, les déchets inhérents à l'activité biologique sont dilués dans un grand volume d'eau et sont éliminés par différentes réactions métaboliques ou chimiques. L'immensité du biotope est le garant de la stabilité du milieu. Dans un milieu clos, ces déchets ne peuvent s'éliminer et ont tendance à s'accumuler. Ces déchets sont principalement liés au métabolisme azoté et carboné. Le cycle aérobie de l'azote assure la dégradation des protéines en ammoniaque, en nitrites et en nitrates. Ce cycle exige une concentration en oxygène importante et constante. Cette phase ne pose pas de problème en règle générale dans des aquariums entretenus bénéficiant souvent d'une aération forcée.

Les nitrates représentent le dernier maillon aérobie du cycle de l'azote. Ils ne sont pas dégradés et s'accumulent inexorablement dans l'aquarium.

Bien que les nitrates soient nettement moins toxiques que les nitrites ou que les ions ammoniums, cette accumulation devient à la longue, néfaste pour l'équilibre de l'aquarium.

L'amateur est donc obligé de procéder à la vidange partielle du bac et son remplissage avec de l'eau propre pour diminuer la concentration en nitrate. Cette opération est contraignante, spécialement en appartement. Elle n'est pas dénuée de tous risques pour l'équilibre de l'aquarium, l'eau introduite pouvant apporter divers polluants tels que résidus chlorés, métaux lourds, contaminants bactériens ou viraux. Le choc thermique est susceptible de favoriser l'émergence de pathologies chez les poissons les plus fragiles et les invertébrés en général.

Pour espacer les changements d'eau, il est nécessaire de prévoir un dispositif destiné à éliminer les nitrates de l'eau de l'aquarium.

Pour ce faire, il est possible d'utiliser un procédé bactériologique. Il existe en effet des bactéries capables de réduire les nitrates jusqu'à obtention d'azote gazeux (un des composants de l'air et donc non toxique). Ces bactéries prospèrent au fond des lacs et des océans dans des milieux souvent réducteurs et hypoxiques. Ce sont des bactéries anaérobies strictes ou facultatives selon les genres. Il n'est pas possible de les héberger directement dans le bac de l'aquarium. Il faut, pour les élever, utiliser un réacteur de culture spécial où les conditions propices à leur développement sont réunies.

## II- Rappel du cycle de l'azote en aquarium

Les animaux maintenus en aquarium reçoivent une alimentation qui leur permet d'assurer leur croissance et les processus metaboliques essentiels à leur vie. La pollution du milieu inévitable est due au surplus de nourriture non ingérée, aux fécès, aux desquamations... Leur dégradation en éléments de plus en plus simples (acides aminés) s'effectue par une flore bactérienne hétérotrophe.

Dans un premier temps, la phase de désamination est effectuée par des bactéries aérobies qui utilisent les acides aminés, les acides nucléiques et les bases azotées comme source d'énergie. Elles rejettent de l'ammoniac ($NH_3$). Les reins des poissons téléostéens rejettent également de l'ammoniaque dans l'eau.

On admet un seuil de toxicité en eau douce de 0,01 mg/l d'ammoniac total ($NH_3$, $NH_4^+$ et $NH_4Cl$)

A partir de 0,02 mg/l, les premiers symptômes (Hyperplasie branchiale) font leur apparition.

Si le seuil de 1 mg/l est atteint, les mortalités se succèdent avec les symptômes suivants : apparition d'hémorragies cutanées, brûlure de la peau et des muqueuses, dérèglement du système nerveux central induisant des pertes d'équilibre et un comportement désordonné, dérèglement du système osmorégulateur, perte d'efficacité de l'hémoglobine.

Rapidement, l'ammoniaque est converti en nitrites sous l'action de bactéries autotrophes du genre Nitrosomonas ou Nitrococcus. C'est la nitrosation.

$$NH_4^+ + OH^- + 1,5\, O_2 \rightarrow H^+ + 2H_2O + NO_2^-$$

En fin de cycle, les nitrites sont converti en nitrates sous l'action de bactéries autotrophes oxyphiles du genre Nitrobacter et Nitrocystis. C'est la nitratation

$$2NO_2^- + O_2 + OH^- \rightarrow 2NO_3^- + H^+$$

Les nitrates sont bien moins toxiques que l'ammoniac ou les nitrites. Ils ne deviennent alarmants que s'ils dépassent 100 mg/l et dangereux vers 300 mg/l. Dans le milieu naturel, ils ne peuvent être éliminés que de deux manières. Premièrement, ils sont consommes par les plantes dans des proportions relativement réduites. Deuxièmement, dans certaines conditions (concentration en oxygène très faible voire nulle, potentiel REDOX négatif..), Ils peuvent être réduits en azote gazeux par quelques genres bactériens anaérobies

### III-Toxicité des nitrates pour un aquarium et ses hôtes.

Leur accumulation lente et pernicieuse induit des phénomènes d'eutrophisation au sein même de l'aquarium. Le développement exponentiel de cyanophycées est bien souvent le signe d'une concentration excessive de nitrates. Ces algues dégageant une forte odeur d'acétone sont indésirables a plus d'un titre.
Premièrement, sur un point de vue purement esthétique, elles s'étendent en prenant la forme d'un tapis mucilagineux très disgracieux. Une fois qu'elles sont parvenues a s'installer, il est extrêmement difficile de les déloger. Elles sont dotées de mécanismes d'adaptation très sophistiqués qui leur permettent d'utiliser l'azote moléculaire ($N_2$) directement si les nitrates venaient à manquer. Par conséquent, une régularisation de la situation après leur apparition ne permet pas à l'aquarium de retrouver un équilibre stable. Deuxièmement, elles sont toxiques. Leur odeur rebute souvent les poissons les plus goulus, mais la tentation est parfois plus forte que la raison.
Troisièmement, elles recouvrent en quelques heures la totalité du décor de l'aquarium et empêchent le sable de s'aérer convenablement. Les plantes, totalement recouvertes, finissent par péricliter et engendrent une pollution organique supplémentaire qui ne peut que nuire a l'équilibre du bac.
Ces algues ne peuvent être combattues avec une probabilité raisonnable de réussite qu'avec des moyens importants qui ne sont ni sans danger ni à la portée de l'amateur (virus cyanophage, choc osmotique, sédimentation par de l'oxyde de calcium).
La filtration est également fortement perturbée par une concentration excessive (1000 mg/l) en nitrates. Les nitrates augmentent le gradient de concentration et gênent par conséquent le comportement excréteur des bactéries nitrifiantes.
Enfin, certains auteurs suspectent une possibilité pour les poissons de réduire les nitrates en nitrites dans leur tube digestif Cette intoxication provoque les mêmes symptômes qu'une intoxication par les nitrites.
La toxicité des nitrates sur les organismes maintenus dans l'aquarium est également importante. (Dose don- née en $N-NO_3$).
Perturbation du système osmotique des poissons. DL 50 sur 96 heures varie selon les sources de 1000 a 3000 mg/l.
Effet sur le transport de l'oxygène. Les nitrates augmentent le pourcentage de méthémoglobine dans le sang des poissons. A titre d'exemple, il a été décelé chez la truite Arc-en- ciel (Oncorhynchus my kiss) une légère augmentation du taux de méthémoglobine sanguin corrélé a un dérèglement des centres hématopoïétiques dès une concentration de 5 à 6 mg/l.
Les effets létaux sur des crevettes ont été reportés. LC 50 sur 48 heures : 3400 mg/l
Sur les mollusques LC 50 sur 96 heures 2600 à 3800 mg/l selon les sources.
Des effets sur la croissance sont également observés.
Un début de retard de croissance est observé à partir de 90 mg/l.
La croissance des pénéidés ne semble pas affectée jusqu'à une concentration de 200 mg/l.
La croissance de la chevrette est diminuée de 50% si elle est soumise en permanence à une concentration en nitrates de 180mg/l.
La croissance des mollusques (huîtres et dams) est diminuée de 50% s'ils sont soumis à une concentration de 2800 mg/l.
Chez le poulpe commun (Octopus vulgaris) les premiers signes de détresse sont remarqués dès une concentration en nitrates avoisinant les 500 mg/l.
Pour les cantonner dans des concentrations admissibles, les aquariophiles doivent effectuer des changements d'eau ou investir dans un dénitrateur. La dose maximale a ne pas dépasser devrait être de 250 mg/l !
Un taux de nitrates proche de zéro permet le maintien d'animaux fragiles (madrépores, bénitiers...) et la reproduction d'espèces de poissons délicates ou simplement de souches sauvages. Un dénitrateur efficace deviendra un élément technique indispensable dans les années à venir pour tout aquariophile éclairé.
La dénitratation est un phénomène naturel. Le processus incomplet est responsable de l'augmentation du taux de nitrites dans les nappes phréatiques. En mer, des poches contenant de fortes concentrations en nitrites sont répertoriées. On ignore si elles sont dues à une mauvaise nitrification ou à une dénitratation incomplète.

## IV- Présentation des différents modes de dénitratation.

Deux grandes voies de dénitratations sont actuellement connues.

La dénitratation autotrophe. Cette dégradation repose sur la culture d'un genre bactérien particulier (Beggiatoa alba) utilisant le carbone minéral. Le soufre est utilisé comme source d'énergie. La réaction ne peut s'effectuer qu'en milieu anaérobie strict. Dans le cas contraire, aucune dénitrification n'est possible. Dans les deux cas, on obtient un enrichissement rapide de l'eau en ions sulfates couplé à une acidification du milieu. Cette voie de dénitratation n'est citée ici que pour mémoire. Aucun dispositif du commerce aquariophile ne fonctionne actuellement sur ce principe qui n'en est encore qu'à ses balbutiements.

La dénitratation dite hétérotrophe. Elle implique la présence de composés hydrogénocarbonés comme source de carbone et peut suivre trois grandes voies :

- Une réduction assimilative commune à certaines plantes, algues, champignons et bactéries des genres Azotobacter, Pseudomonas, Bacillus, Arthrobacter et quelques genres de Cyanophycées. Elle aboutit à la production d'ammoniac ($NH_3$) qui est assimilé par les organismes réducteurs.
- Une réduction dissamilative incidente caractérisant la fermentation de certains sucres.
- Une réduction dissamilative véritable. Elle est le fait de germes dénués de pouvoir fermentaire. Elle n'est possible qu'en milieu anaérobie ou hypoxique. En cas de déficit en oxygène, ces genres bactériens sont capables de réduire les nitrates en azote moléculaire et de récupérer l'oxygène pour assurer leurs réactions métaboliques.

Ces genres bactériens, au nombre d'une vingtaine sont essentiellement : Pseudomonas, Thiobacillus, Bacillus... Ils sont tous anaérobies facultatifs, Gram négatifs, non sporulants. Cette dernière voie a été particulièrement étudiée par le laboratoire de l'inventeur. Le dénitrateur hétérotrophe $CO_2$ dépendant fonctionne en cultivant ces genres bactériens sous atmosphère contrôlée.

## V- Etude des systèmes concurrents.

On trouve actuellement sur le marché plusieurs dispositifs de dénitratation reposant sur des procédés divers.

Le premier dispositif étudié se présente sous la forme d'un réacteur tubulaire en matière plastique. Le réacteur est alimenté en eau par une prise d'eau branchée en dérivation sur la sortie du filtre. Une vanne permet de régler le débit au goutte à goutte.

Le réacteur est garni d'un support bactérien, constitué par des copeaux de mousses imprégnées de nutriments qu'il n'a pas été possible de déterminer.

L'hypoxie est obtenue par un moyen original: une gélule contenant du Fer est disposée en haut de la colonne. L'eau ruisselle sur la gellule entraînant l'oxydation du fer et donc une consommation d'oxygène.

D'après le fabricant, aucun entretien n'est nécessaire. L'apport de nutriments est inutile, les bactéries trouvant, en théorie, tous les éléments indispensables à leur vie sur les copeaux de mousse.

Aux vues des résultats des différentes expérimentations menées sur ce dispositif, il semble que le système censé maintenir l'anaérobiose utilisant l'oxydation d'atomes de Fer soit insuffisant, aucune efficacité particulière n'ayant été constatée quand à la dégradation de Nitrates.

Plus encore, au bout d'un délai relativement court et correspondant théoriquement à la mise en place de la flore bactérienne, un développement abondant d'algues vertes s'est produit à l'intérieur même du corps du dénitrateur a été constaté. La photosynthèse effectuée par ces algues produit de l'oxygène et par conséquent ne permet pas le maintien d'une atmosphère anaérobie ou hypoxique.

Malgré un débit très bas, il n'a jamais été possible d'atteindre des concentrations en oxygène suffisamment faibles pour amorcer une dénitratation efficace.

Il apparait que ce système est loin d'être au point et qu'il reste encore beaucoup d'améliorations à effectuer pour parvenir à une dénitratation correcte

Le second dispositif se présente sous la forme d'un réacteur étanche de 3 litres garni de ouate. Comme dans le dispositif précédent, le filtre est alimenté par une dérivation d'une partie du débit d'eau filtrée.

Dans ce dispositif, le principe retenu pour baisser le taux d'oxygène est d'augmenter le temps de séjour de l'eau dans le réacteur. Le débit est faible. L'eau passe par de nombreuses chicanes. Au cours de trajet, le taux d'oxygène est supposé diminuer graduellement. A un certain point du trajet, la pression partielle d'oxygène et le potentiel Redox ont suffisamment diminué pour que la population bactérienne évolue et que l'on voit apparaître des bactéries anaérobies dénitratantes.

Le substrat hydrogénocarboné utilisé est un alcool. Conditionné dans une fiole de 10 millilitres, il est nécessaire de verser 15 gouttes tous les jours dans un compartiment prévu à cet effet.

Le procédé tel que décrit n'a pas eu les résultats escomptés lors de nos tests en laboratoire. La dénitratation impose si l'on ne souhaite pas influer sur les pressions partielles des gaz dissous, de maintenir un potentiel Redox compris entre - 50 et - 300 mV. Au-dessus de cette limite, la dénitratation est stoppée au stade nitrites ce qui est beaucoup plus dangereux qu'une accumulation de nitrates. En dessous de la barre de - 300 mV, la réaction utilise les sulfates et produit de l'hydrogène sulfuré ($H_2S$), hautement toxique.

Le dispositif étudié ne permet pas un abaissement suffisant du potentiel Redox. Le bleu de méthylène a la propriété de se décolorer lorsque le potentiel Redox devient négatif (-60 mV). De tous les prélèvements que nous avons pu réaliser, aucun ne s'est décoloré.

Le substrat utilisé est de l'éthanol. C'est un excellent substrat hydrogenocarboné. 85 mg d'éthanol suffisent pour dégrader 100 mg de nitrates.

En revanche, il doit être ajouté quotidiennement, ce qui est contraignant pour l'aquariophile.

Dans le troisième dispositif, l'eau est injectée dans le réacteur avec un débit très faible. Une pompe assure le brassage intérieur.

Le substrat hydrogénocarboné est constitué de glucose conditionné en pastilles (système breveté).

Ce substrat se révèle relativement peu efficace a l'utilisation, ce qui permet d'expliquer le mauvais fonctionnement constaté du dénitrateur.

Un nutriment de forte valeur énergétique permet aux bactéries dénitratantes qui sont, rappelons-le, anaérobies facultatives de se satisfaire du peu d'oxygène contenu dans l'eau et d'extraire l'oxygène du glucose en cas de carence. En effet l'étancheité n'est jamais parfaite et il reste toujours un résidu d'oxygène dans l'eau. Les bactéries ne dégradent donc en principe jamais les nitrates.

Il existe un autre inconvénient au système :

La réaction chimique attendue est la suivante,

$$24\ NO_3 + 5\ C_6H_{12}O_6 \rightarrow 12\ N_2 + 30\ CO_2 + 18\ H_2O + 24\ OH^-$$

En condition anaérobiose il existe un fort risque de voir se produise une fermentation méthanique des sucres ce qui est dangereuxen aquariophilie.

$$C_6H_{12}O_6 \rightarrow 3\ CH_4 + 3\ CO_2$$

Le méthane est un gaz insoluble dans l'eau mais qui présente l'inconvénient de détonner au contact d'une étincelle.

Enfin, le système est assez onéreux. Il doit être équipé, dans sa version définitive, d'une sonde Redox qui permet de réguler le débit et l'apport de nutriments en fonction de potentiel Redox. Si le potentiel dépasse - 50 mV il faut apporter d'avantage de nutriments, si le potentiel diminue en dessous de - 300 mV (risque de production d'hydrogène sulfuré) il faut augmenter le débit d'eau. Ce moyen permet de contrôler en temps réel l'efficacité du filtre.

La pastille de sucre doit être ajoutée quotidiennement, ce qui est contraignant pour l'utilisateur.

### VI- Exposé de l'invention

1 - Présentation des mécanismes métaboliques bactériens :

Le dénitrateur hétérotrophe $CO_2$ dépendant mis au point utilise la dernière voie de réduction des nitrates : la réduction disassimilative véritable.

$$NO_3^- \rightarrow NO_2^- \rightarrow NO \rightarrow N_2O \rightarrow N_2 \text{ qui dégaze}$$

*2 - Description du réacteur*

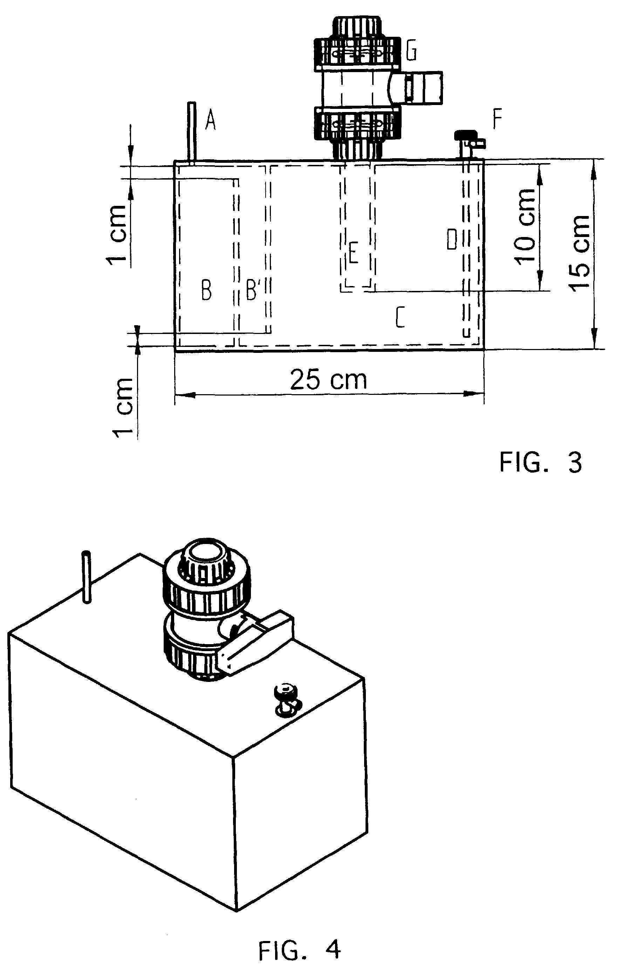

Le chapitre suivant décrit une des formes possibles que peut prendre l'invention. La figure 4 est une vue générale du réacteur. La figure 3 est une vue en coupe.

Le volume total du réacteur représenté est de 4,5 litres. Il est toutefois possible d'obtenir la réduction des nitrates avec un réacteur de moindre volume.

Le réacteur se compose principalement de deux chambres. L'une est aérobie, l'autre anaérobie. Ces deux chambres sont séparées par une chambre transitoire. L'ensemble du réacteur est rempli d'un garnissage présentant une grande surface spécifique. Dans l'exemple présenté, il s'agit de pouzzolane.

Une pompe à eau amène l'eau de l'aquarium dans le dénitrateur sous une pression d'environ 0,4 mCE. L'eau arrive dans le filtre par une canule (A) débouchant dans la première chambre (B). Ce compartiment est aérobie, l'eau d'entrée étant chargée en oxygène. Cet oxygène est consommé en grande partie dans la première chambre par des réactions de nitrification. Cette chambre occupe dans le modèle présenté un volume de 0,9 litre. Elle communique avec le compartiment dénitratant proprement dit par un compartiment transitoire de 0,5 litre (B').

La partie dénitratante (C), d'un volume de 3,1 litres reçoit l'eau issue de la nitrification, partiellement appauvrie en oxygène.

Au centre de cet élément est placé un tube de diffusion microperforé (E) communiquant avec l'extérieur par une vanne étanche (G).

La sortie de l'eau s'effectue par la canule (D). La régulation du débit est assurée par un robinet goutte à goutte anti-calcaire (F).

Dans sa version définitive, le dénitrateur est démontable, contrairement à certains produits concurrents. Un nettoyage régulier et un réensemencement avec une partie de la pouzzolane que l'on aura pris soin de ne pas laver permet au dénitrateur de reprendre ses fonctions dans les jours qui suivent.

*3- Choix du support bactérien :*

La pouzzolane a été retenue en raison de sa grande surface s pécifique, de son prix modique et de sa richesse en éléments assimilables.

| Eléments | % | | Eléments | % |
|---|---|---|---|---|
| $SiO_2$ | 44,83% | | $K_2O$ | 2,09% |
| $Al_2O_3$ | 14,93% | | $Na_2O$ | 6,50% |
| $Fe_2O_3$ | 11,36% | | MnO | 0,19% |
| CaO | 10,01% | | $P_2O_2$ | 1,65% |
| MgO | 8,27% | | $TiO_2$ | 2,29% |

Le débit calculé du dénitrateur est de 0,250 litres/heure soit un taux de mouillage de $1,3.10^{-9}$ $m^3/m^2.s$

Nous avons déterminé au laboratoire une surface s pécifique d'environ 900 $m^2/m^3$ pour la pouzzolane 2/6 que nous utilisons.

*4- Etude du substrat et principe chimique:*

Le substrat se compose de 2 éléments qui seront compactées en deux pastilles différentes dans le produit fini.

-    0,28 gramme d'acide citrique.
-    0,38 gramme de bicarbonates ($NaHCO_3$).

L'acide citrique réagit avec les bicarbonates en produisant du gaz carbonique. Ce dernier, est prisonnier de la colonne de diffusion (E). Ce procédé de dissolution permet d'obtenir des pressions partielles de $CO_2$ de l'ordre de 50 mg/l dans le réacteur.

Dans le denitrateur, le $CO_2$ en pression permet d'abaisser en proportion la pression partielle en oxygène dissous.

La base conjuguée de l'acide citrique fait office de substrat hydrogénocarboné. On peut estimer le rendement en fonction de celui de l'acide acétique ($CH_3$-COOH) , souvent utilisé comme nutriment, qui est de 250 g consommés pour dégrader 200 g de nitrates.

L'équation simplifiée de la dégradation est la suivante

$$NO_3^- + C_6H_8O_7 + H_2O \rightarrow N_2 + CO_2 + OH^-$$

En eau pure, le pH a tendance à baisser sous l'effet de l'augmentation de la concentration en acide carbonique. Cependant dans l'eau d'un aquarium équilibrée, le $CO_2$ dissous participe a l'équilibre calco-carbonique et son apport dans l'eau aboutit à la production de bicarbonates garants de la stabilité du pH. Ce dernier est maintenu aux alentours de 8,3. L'activité dénitratante est également productrice d'ions hydroxydes.

Ceci est particulièrement intéressant pour les aquariums coralliens en circuit fermé qui sont en permanence sujets a des variations de pH et d'alcalinité. Ce système de dénitratation permet de maintenir indirectement un pH constant aux alentours de 8,3 et une alcalinité constante (environ 16°F).

De plus, la base carbonatée (Bicarbonates de sodium) peut être remplacée en partie ou en totalité par de bicarbonates (ou carbonates) de calcium et de magnésium. La libération d'ions Calcium ($Ca^{2+}$) et Magnésium ($Mg^{2+}$) permet de maintenir une dureté totale élevée idéale pour la croissance des coraux batisseur. Ce système remplace les dispositifs de réacteur a calcium toujours complexe et de système basée sur l'introduction de d'eau de chaux décantée ($CaOH_2$) (système KarlWasser).

L'addition au substrat d'une fraction de bicarbonates (ou carbonate) de strontium permet également d'augmenter la concentration en ions Strontium ($Sr^{2+}$)dans l'aquarium.

Ce système permet, en calculant au mieux le dosage des pastiles, de remplacer bon nombre de produits de traitement courants pour eau de mer (régulateur pH, Solution de calcium et de magnésium concentré, Apport de Strontium...). Les teneurs en oligo-éléments sont maintenus constantes de même que le pH.

Le $CO_2$ en excès se concentre en pression dans les 5 millimètres de la partie haute du dénitrateur. L'azote moléculaire dégagé par le métabolisme bactérien est également stocké dans cette partie. L'introduction de la pastille (Acide citrique/bicarbonate) est à effectuer tous les 3 jours. Cette opération nécessite l'ouverture de la vanne du compartiment anaérobie et permet l'évacuation de la totalité de l'azote gazeuxet du $CO_2$ en excès. Une fois la vanne fermée, la pastille se dissous et le cycle recommence. L'augmentation de la taille de la pastille permet de diminuer la fréquence de la distribution.

Les conditions obtenues permettent d'éviter les fermentations méthaniques. Ces fermentations produisent ce que l'on nomme couramment le gaz des marais avec un rendement de 1 litre de gaz par gramme de matières fermentescibles. La composition de ce gaz est la suivante:

$CH_4$ : 65 - 70 %
$CO_2$ : 25-30 %

D'autres gaz toxiques sont également produits mais a des concentrations beaucoup plus faibles (CO, $N_2$, $H_2$, $H_2S$, $NH_3$). Leurs concentrations respectives varient en fonction du substrat et des conditions physico-chimiques du milieu.

Les bactéries responsables de ces fermentations appartiennent aux genres Methanobacter, Methanococcus, Methanobacterium, Methanosarcina, Methanothrix, Thermoautrophicum.

Les conditions optimales de leur développement sont les suivantes:

pH compris entre 6,8 et 7,2
Température entre 30 et 35 °C

Il faut noter que l'apport de sucre comme substrat hydrogénocarboné favorise ce type de fermentation.

Au cours des expérimentations, nous n'avons noté aucun dégagement de méthane ni de signe d'une quelconque putréfaction même au bout de plusieurs mois de fonctionnement forcé. Laissé à l'abandon plusieurs mois, le susbstrat ne dégageait aucune odeur suspecte.

*5 - Dosage des pastilles :*

L'acide citrique est un triacide. Une mole réagit en solution aqueuse avec 3 moles de bicarbonate.

Masse molaire de l'acide citrique : 192 g/mol
Masse molaire des bicarbonates de sodium : 84 g/mol.

Nous avons un rapport de 192/ 3 x 84 soit 0,76.

Une dose de 0,28 g d'acide citrique et de 0.36 g de bicarbonates assure une pression partielle de $CO_2$ dissous suffisante pour permettre la dénitratation dans le dispositif

*6 - Résultats expérimentaux :*

Le suivi des paramètres physico-chimiques a donné les résultats suivants.

Le titre hydrotimétrique (T.H.) est resté stable. Une moyenne de 10,02 degrés Français a été calculée. L'écart-type pour ce paramètre est de 1,68. L'activité du dénitrateur n'a donc aucune influence sur le taux de calciumet de magnésium dissous. Aucune précipitation n'a été remarquée.

En revanche, l'alcalinité (moyenne : 10,48°F pour un écart-type de 3,91°F) a considérablement augmenté pour deux raisons majeures:

- Une diffusion de $CO_2$ induit parallèlement une augmentation de l'alcalinité par déplacement de l'équilibre calco-carbonique en faveur de la production d'ions bicarbonates.
- L'activité dénitratante est productrice d'ions bicarbonates à raison de 0,081 degrés français par mg de nitrate dégradé.

Rapporté en milligramme de nitrates (en $NO_3$), la diminution de la concentration est de 11,1 mg ($N-NO_3$), soit environ 50 mg de $NO_3$.

Ceci induit une augmentation de l'alcalinité de 0,081 x 50 = 3,98 degrés Français.
Au TAC qui est de l'ordre de 12,6 °F pour l'eau de la région Toulousaine où se situe notre laboratoire vient s'ajouter 3,98 °F soit un total de 16,58 °F.
La différence entre ce chiffre et l'alcalinité finale est due au déplacement de l'équilibre calco-carbonique.

La dégradation des nitrates est ici évidente, comme l'illustrent les courbes ci-dessous. La concentration en début d'expérience était de 24,7 mg/l en $N-NO_3$. Elle est passée à 13,6 mg/l au bout d'environ un mois d'expérimentation. Une dégradation de 11,1 mg/l $N-NO_3$ (soit environ 50 mg/l en $NO_3$) est observée en un peu plus d'un mois.
A titre de comparaison, la dégradation moyenne annoncée pour les dénitrateurs de la concurrence est de 4 à 6 mg/l $N-NO_3$ (soit 20 à 30 mg/l en $NO_3$).

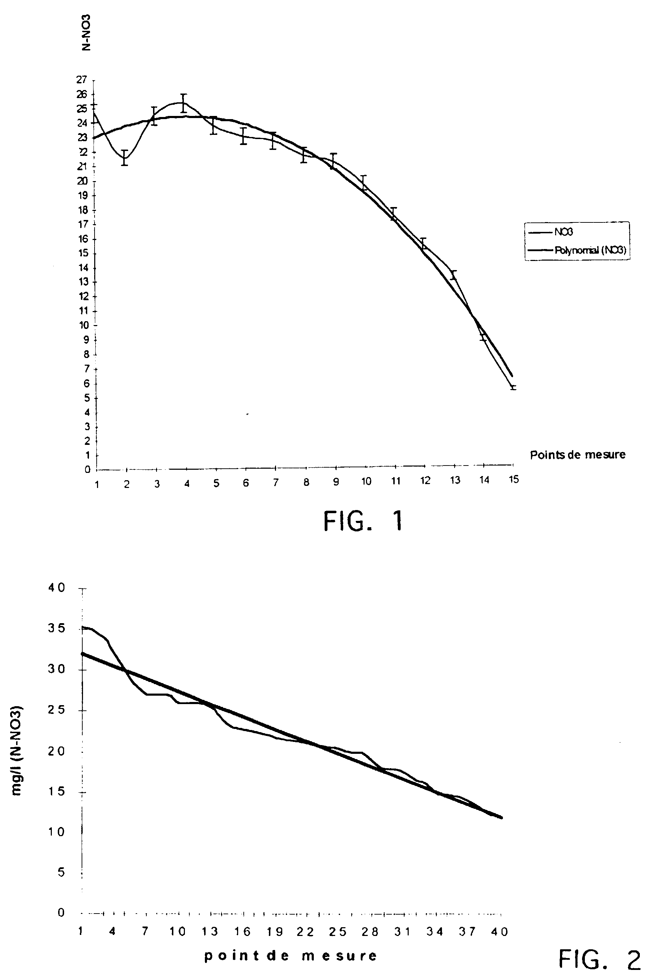

En terme de cinétique, une équation de régression peut être calculée d'après le graphique Figure 1 de la planche 1/2 qui représente la cinétique de dégradation des nitrates, mesurée tous les deux jours.

La dégradation peut être qualifiée d'ordre 2. Elle est dépendante de la concentration en substrat. La vitesse augmente avec la diminution de la concentration en nitrates du bac. Il est ainsi possible d'obtenir des concentrations en nitrates nulles en quelques mois. La vitesse augmente également lors des distributions de substrat.

Le débit fixé expérimentalement à 0,250 litre/heure peut être augmenté pour accélérer la dégradation des nitrates.

Le débit doit suivre le profil de la croissance bactérienne. Avec un débit initialement faible, le temps de séjour des nutriments sera d'autant plus long que le débit sera faible. Donc la probabilité qu'un nutriment rencontre une bactérie sera élevée. Le débit initial du dénitrateur est donc volontairement faible. Par la suite, lorsque la colonie bactérienne s'est étoffée, il est possible d'augmenter le débit et donc la quantité de nutriments. Il va de soi que la consommation demandée en $CO_2$ et en substrat sera d'autant plus importante.

L'arrêt de la distribution du substrat (oubli, vacances) n'entraîne pas la mort des bactéries dénitratantes. La dégradation des nitrates ralentit puis s'arrête. La remise ne route du système reprend dès que les conditions deviennent favorables après une courte période d'adaptation.

*7 - Amélioration de l'efficacité du substrat bactérien.*

Un troisième élément peut être apporté à la pastilles. L'acide ascorbique (vitamine C) permet de meure en évidence 2 points intéressants.

- Le pouvoir réducteur (anti-oxydant) de cette molécule facilite l'équation de réduction des nitrates en nitrites.
- Il a été remarqué qu'une distribution légère et régulière d'acide ascorbique intervient sur la dégradation. Nous pouvons, comme le montre le graphique ci-dessous, optimiser la courbe de dégradation par une équation de régression linéaire d'ordre 0. Le taux d'élimination devient alors indépendant de la concentration en nitrates. La dégradation est constante comme l'illustre la figure 2, planche 1/2 représentant la cinétique de dégradation des nitrates dans le bac test. Une mesure est a été effectuée chaque jour.

Pour mémoire, cette vitesse constante et également obtenue en utilisant du méthanol ($CH_3OH$). Cette molécule est inflammable et toxique par ingestion, inhalation et absorption cutanée. La dose toxique est d'environ 30 mi d'après certaine source. Ce substat ne peut pas être utilisé hormis dans des cas bien précis.

*8 - Amélioration du dispositif.*

Nous avons amélioré le dénitrateur en ajoutant en sortie de réacteur, un système de rejet modifié. L'eau s'écoule sur un substrat poreux. Le contact avec l'atmosphère permet de dégazer l'eau provenant du dénitrateur. Elle se débarasse du $CO_2$ en excès et de l'azote moléculaire dissous issue de l'activité dénitratante. Ce procédé permet d'éviter des sursaturations dangereuses pour l'élevage d'espèces fragiles.

*9 - Utilisation du dispositif pour la production d'ions calcium et d'autres éléments nécessaires à l'élevage d'espèces particulières.*

Certains élevages délicats, (coraux, algues calcaires, spongiaires..) exigent un taux particulièrement élevé en ion calcium. On note dans la bibliographie des concentrations requises en aquariologie récifale de l'ordre de 500 mg/l de calcium.

Les aquariologistes cultivant ces espèces utilisent des tampons carboniques pour maintenir l'alcalinité et le pH. L'eau de chaux (Kalkwasser) est fréquemment utilisée. Cette technique est périlleuse.Une mauvaise utilisation engendre une baisse de l'alcalinité par précipitation des carbonates consécutive à une élévation trop importante du pH. De plus, l'ajout d'eau de chaux (pH =12) provoque des fluctuations inévitables du pH.

Pour répondre à ce besoin calcique, il est théoriquement possible d'utiliser le dispositif décrit plus haut en incorporant au substrat une fraction de carbonate d'un alcalino-terreux essentiel a la croissance du corail. Ces bases, en réagissant avec l'acide citrique, produisent des ions bicarbonates, du calcium et du magnesium assimilables selon la composition du substrat initial.

Dans un premier temps, nous avons développé un substrat comprenant une partie de carbonates de calcium. Nous arrivons à des concentrations en bicarbonates et en calcium proches de la saturation. La croissance des coraux est, dans ces conditions, facilitée. On écarte tout risque d'épuisement de l'alcalinité et de dérive du pH. Les changements d'eau permettent de contrôler une augmentation excessive de l'alcalinité. Aucune précipitation n'est possible puisque le pH tend vers 8,3. Ces multiples avantages rendent l'utilisation d'eau de chaux totalement dépassée.

Dans un second temps, nous avons incorporé avec succès du carbonate de magnésium au substrat. Des essais concluants ont même été réalisé avec du carbonate de strontium. Il est possible de répondre finement à la demande en oligo-éléments des espèces délicates en incorporant au substrat de l'invention les sels correspondants. Le dispositif offre là de formidables possibilités a l'amateur ou au professionnel...

Les pH extrêmes donnes pour l'élevage des coraux par la litterature sont de 7,6 à 9,0. Un pH de 7,6 inhibe la cristallisation du carbonates de calcium dans la matrice chitineuse. Un pH de de 9,0 réduit la quantité de calcium assimilable. Certains organismes commencent à souffrir. Le pH optimal pour la calcification est de 8,4, la fourchette idéale se situant entre 8,3 et 8,5.

Le pH observé lors de nos expérimentations reste compris entre 8,3 et 8,5.

## Revendications

1. Dispositif permettant d'éliminer les nitrates d'un milieu aqueux et applicable a l'aquarium utilisant des micro organismes anaérobies élevés dans un réacteur bactérien caractérisé par le fait que la pression partielle en oxygéne ($O_2$) est maintenue à un faible niveau par sursaturation du milieu en gaz carbonique ($CO_2$).

2. Dispositif selon la revendication n°1, caractérisé par l'utilisation de la réaction d'un acide organique faible avec une base carbonatée pour la génération du gaz carbonique ($CO_2$) nécessaire.

3. Dispositif selon les revendications n° 1 et 2 caractérisé par l'utilisation des bases conjuguées de l'acide organique résultante de la réaction acido-basique comme nutriment bactérien hydrogéno-carboné.

4. Dispositif selon les revendications n° 1 à 3 caractérisé par le maintien, grâce à la réaction évoquée dans la revendication n° 2 d'un potentiel d'oxydoréduction élevé inhibant la croissance de bactéries indésirables, méthanogènes ou productrice de gaz hydrogénosulfurées.

5. Dispositif selon les revendications n° 1 à 4 caractérisé par la possibilité d'utiliser du carbonate (ou bicarbonate) de calcium et de magnésium en mélange ou en remplacement de la base carbonatée du substrat bactérien dans le but d'augmenter les duretés calciques et magnésiennes indispensables à la croissance des coraux durs.

6. Dispositif selon les revendications n° 1 à 5 caractérisé par la possibilité d'utiliser le dispositif pour enrichir le milieu aquatique en éléments indispensables comme le Strontium ou le Molybdène, ceci en incorporant au substrat bactérien les sels correspondants.

7. Dispositif selon les revendications n° 1 à 6 caractérise par l'utilisation d'acide ascorbique comme agent réducteur et antioxydant ayant pour effet de favoriser la réaction de réduction et de linéariser la courbe de dégradation des nitrates.

8. Dispositif selon les revendications n° 1 à 7 caractérisé par l'utilisation possible de multiples supports bactériens classiques: pouzzolane, céramiques, structures alvéolees etc pour assurer la fixatoin bactérienne.

9. Dispositif selon les revendications n° 1 à 8 caractérisé par la possible utilisation, en guise de complément, d'un apport externe en $CO_2$ provenant, par exemple, d'une bouteille de gaz liquéfié ou sous pression afin de garantir une pression partielle en $CO_2$ toujours suffisante dans le cas de concentrations en nitrates élevées.

10. Dispositif selon les revendications n° 1 à 9 caractérisé par la possibilité d'asservir l'apport externe en $CO_2$ ou l'alimentation en réactifs acido basiques aux indications d'un pH-mètre, permettant le maintient d'une pression partielle en $CO_2$ optimale pour le développement des bactéries denitratantes.

11. Dispositif selon les revendication n° 1 à 10 caractérisé par le fait que les réactifs sont isolés du milieu bactérien par une chambre semi-perméable constitué d'un cylindre microperforé traversant le milieu bactérien de part en part et permettant la diffusion de CO2 ainsi que des nutriments hydrogénocarbonés.

12. Dispositif selon les revendications n° 1 à 11 caractérisé par la possibilité d'utiliser en lieu et place de la chambre de diffusion évoquée dans la revendication n° 10, divers systèmes de diffusion, comme par exemple des membranes semi perméables ou des diffuseurs en verre fritté.

13. Dispositif selon les revendications n° 1 a 12 caractérisé par l'utilisation facultative, d'un préfiltre sur l'entrée d'eau destiné a limiter la pollution du milieu bactérien. Ceci est particulièrement utile si le réacteur est utilisé dans des eaux turbides

14. Dispositif selon les revendications n° 1 à 13 caractérise par le fait que la cuve principale du réacteur peut être d'une forme quelconque et peut être construite en divers matériaux, pourvu que ceux-ci soit faiblement solubles dans l'eau, soient neutres vis à vis de la réaction acido-basique évoquée plus haut et n'aient pas d'influence sur la croissance bactérienne.

15. Dispositif selon les revendications n° 1 à 14 caractérisé par l'utilisation possible d'une pompe de circulation interne ou tout autre dispositif destiné a assurer le brassage de l'eau à l'intérieur du réacteur, ceci dans le but d'obtenir un milieu homogène.

16. Dispositif selon les revendications n°1 à 15 caractérisé par l'utilisation possible, en sortie de réacteur, d'un système d'aspersion, de cascade ou tout autre dispositif destiné à abaisser les pressions partielles en gaz dissous ($N_2$, $CO_2$)...par effet de dégazage.

17. Dispositif selon les revendications n° 1 à 16 caractérisé par l'utilisation possible du comprimé effervescent directement dans l'aquarium permettant ainsi d'apporter des molécules diverses (oligo-éléments, antibiotiques, vitamines...).

FIG. 1

FIG. 2

FIG. 3

FIG. 4

**EP 0 955 269 A1**

Office européen
des brevets

**RAPPORT DE RECHERCHE EUROPEENNE**

Numéro de la demande

EP 98 39 0006

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | PATENT ABSTRACTS OF JAPAN vol. 003, no. 033 (M-052), 20 mars 1979 & JP 54 006351 A (CHIYODA CHEM ENG & CONSTR CO LTD), 18 janvier 1979 * abrégé * | 1 | C02F3/28 A01K63/04 |
| A | DE 35 03 723 A (LE INZENERNO STR I) 14 août 1986 * abrégé * * page 5, ligne 31 – page 6, ligne 10 * | 1,8 | |
| A | DE 40 28 312 A (MUELLER WOLF RUEDIGER DIPL ING ;HEINEMANN AXEL DIPL AGR BIOL (DE);) 12 mars 1992 * abrégé; revendication 12 * | 7,8 | |
| A | EP 0 226 715 A (EPPLER ALWIN ;EPPLER DIETER (DE)) 1 juillet 1987 * page 4, alinéa 3 – page 5, alinéa 1 * | 1,8 | |
| A | US 4 970 000 A (EPPLER DIETER ET AL) 13 novembre 1990 * colonne 12, ligne 1 – ligne 24 * | 1 | DOMAINES TECHNIQUES RECHERCHES (Int.Cl.6) C02F A01K |

Le présent rapport a été établi pour toutes les revendications

| Lieu de la recherche | Date d'achèvement de la recherche | Examinateur |
|---|---|---|
| LA HAYE | 29 septembre 1998 | Gonzalez Arias, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

13

**ANNEXE AU RAPPORT DE RECHERCHE EUROPEENNE
RELATIF A LA DEMANDE DE BREVET EUROPEEN NO.**         EP 98 39 0006

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-09-1998

| Document brevet cité au rapport de recherche | Date de publication | Membre(s) de la famille de brevet(s) | | Date de publication |
|---|---|---|---|---|
| DE 3503723 A | 14-08-1986 | AUCUN | | |
| DE 4028312 A | 12-03-1992 | AUCUN | | |
| EP 0226715 A | 01-07-1987 | DE | 3534716 A | 14-05-1987 |
| | | DE | 3545020 A | 25-06-1987 |
| | | DE | 8535754 U | 23-02-1989 |
| | | PT | 83442 B | 29-07-1988 |
| | | US | 4970000 A | 13-11-1990 |
| US 4970000 A | 13-11-1990 | DE | 3534716 A | 14-05-1987 |
| | | DE | 3545020 A | 25-06-1987 |
| | | DE | 8535754 U | 23-02-1989 |
| | | EP | 0226715 A | 01-07-1987 |
| | | PT | 83442 B | 29-07-1988 |

EPO FORM P0460

Pour tout renseignement concernant cette annexe : voir Journal Officiel de l'Office européen des brevets, No. 12/82